# EUROPÄISCHE PATENTSCHRIFT

(11) **EP 0 997 185 B1**
(45) Veröffentlichungstag und Bekanntmachung des Hinweises auf die Patenterteilung: **17.01.2001**
(21) Anmeldenummer: 98120523.0
(22) Anmeldetag: 29.10.1998
(51) Int. Cl.: B01J 2/28

(54) **Verfahren zum Stückigmachen feinteiliger, anorganischer Feststoffe**
Process for compacting finely divided inorganic solids
Procédé pour compacter des solides inorganiques finement diversés

(43) Veröffentlichungstag der Anmeldung: 03.05.2000
(73) Patentinhaber: Frank & Schulte GmbH, 45116 Essen (DE); DSU Gesellschaft für Dienstleistungen und Umwelttechnik mbH & Co. KG, 47139 Duisburg-Beeckerwerth (DE)
(72) Erfinder: In der Wiesche, Volker, Dr., 58642 Iserlohn (DE); Steinberg, Hans-Peter, 45239 Essen (DE); Kokkeling, Hermann, 46509 Xanten (DE); Simbeck, Kai U., 47506 Neukirchen Vluyn (DE)
(74) Vertreter: Albrecht, Rainer Harald, Dr.-Ing.

(56) Entgegenhaltungen:
- EP-A- 0 184 605
- BE-A- 728 159
- DE-A- 2 444 812

## Beschreibung

Die Erfindung betrifft ein Verfahren zum Stückigmachen feinteiliger, anorganischer Feststoffe.

Feststoffe meint im Rahmen der Erfindung feinteilige Materialien, die z. B. in Form von Metallstäuben bei pulvermetallurgischen Prozessen, in Edelstahlwerken und dergleichen in Filteranlagen abgeschieden werden. Als feinteilige Feststoffe kommen aber auch andere anorganische Materialien, z. B. Siliciumstäube und Kohlenstoffstäube in Betracht. In Filteranlagen abgeschiedene Stäube lassen sich nur schlecht transportieren, lagern, dosieren und zuteilen. Zur Verwendung z. B. in der Hüttenindustrie müssen sie in eine körnige oder stückige Form gebracht werden.

Feinteilige Feststoffe bezeichnet im Rahmen der Erfindung nicht nur Stäube, sondern auch feinteilige Schlämme, die z. B. als Reaktionsrückstände, bei Hydrolysevorgängen und dergleichen anfallen können. Auch diese sollen aus anwendungstechnischen Gründen und zum Zwecke der besseren Handhabung in ein grobdisperses Schüttgut überführt werden.

Durch Preßgranulation oder durch Aufbaugranulation werden feindisperse Materialien zu einem groberdispersen Gut agglomeriert. Der Kornbereich der Granulate hängt vom verarbeiteten Material und dem Verwendungszweck ab und reicht von Mikropellets mit einem Korndurchmesser beginnend bei 0,09 mm bis zu stückigen Formkörpern, die vornehmlich zur Verhüttung eingesetzt werden.

Ein Bindemittelzusatz hat wesentlichen Einfluß auf die Qualität der Granulate. Durch Zugabe von Bindemitteln wird die mechanische Festigkeit der Granulate wesentlich verbessert, so daß sie beim Abfüllen und beim Transport nicht zerbrechen und beispielsweise auch als Chargenmaterial in Kupolöfen einsetzbar sind. Ferner schützt das Bindemittel die feinteiligen Feststoffe vor Feuchtigkeit. Herkömmlich konditionierte Stäube oder Schlämme enthalten oft einen Prozentsatz zwischen 5 und 20 Gew.-% an Bindemitteln, wobei als Bindemittel Zement, Kalk und/oder organische Bindemittel verwendet werden. (Ullmanns Encyklopädie der technischen Chemie, Bd. 2, 4. Auflage 1972, Seiten 323 bis 325; EP-A 2 87 934; DE-C 196 02 486).

Aus DE-A 24 44 812 ist ein Verfahren zur Herstellung von Agglomeraten aus feinteiligem Material bekannt, bei dem das Material erhitzt und mit einer ebenfalls erhitzten Binderlösung, die eine gesättigte dendritische, kristallbildende, wässrige Natriumchoridlösung enthält, gemischt und anschließend unter Druck geformt wird. Bei der Abkühlung des geformten Gemisches entstehen Agglomerate durch Rekristallisation der Binderlösung.

Insbesondere in Granulaten aus hochwertigen Materialien sind Bindemittel unerwünscht, da sie die Verwendbarkeit des Produktes einschränken. Werden die Granulate als Chargenmaterial in der Eisenhüttenindustrie eingesetzt, muß darauf geachtet werden, daß das Bindemittel keine unerwünschten Beeinflussungen der chemischen Zusammensetzung mit sich bringt. Ein hoher Bindemittelanteil ist hier sehr störend.

Der Erfindung liegt die Aufgabe zugrunde, ein Verfahren zur Herstellung von Granulaten aus feinteiligen, anorganischen Feststoffen anzugeben, die nur einen geringen Bindemittelanteil besitzen und sich durch eine hohe Festigkeit auszeichnen.

Gegenstand der Erfindung und Lösung dieser Aufgabe ist ein Verfahren zum Stückigmachen feinteiliger, anorganischer Feststoffe, wobei
ein aus feinteiligem Feststoff bestehendes Substrat mit einer wässrigen Silanollösung, die durch Hydrolyse eines Silans hergestellt worden ist, behandelt und durch Mischbewegungen verteilt wird,
das mit der Silanollösung beaufschlagte Material mit einer Alkalilösung behandelt wird, welche an die Substratoberfläche gebundene Silane unter Ausbildung fester Bindungen vernetzt, und
aus dem feinteiligen Feststoff durch einen Preßvorgang oder durch Aufbaugranulation Agglomerate gebildet werden, bevor die Vernetzungsreaktion des Silans erfolgt ist.

Die Silanollösung kann auf das feinteilige Substrat aufgesprüht werden, wobei sich durch die Mischbewegung bereits Agglomerate bilden können. Vorzugsweise werden die Agglomerate in der gewünschten Stückgröße während der anschließenden Behandlung mit der Alkalilösung oder im unmittelbaren Anschluß an diese Behandlung gebildet. Zweckmäßig ist es ferner, wenn das mit der Silanollösung beaufschlagte Material vor der Behandlung getrocknet wird.

In einer bevorzugten Ausführung der Erfindung werden organofunktionelle Silane mit der Summenformel

Y - (CH₂)ₙ - Si X₃

mit n = 0 bis 3,
verwendet, die eine organofunktionelle Gruppe Y sowie eine siliciumfunktionelle Gruppe X aufweisen. Als organofunktionelle Gruppe Y kommt beispielsweise eine der folgenden Gruppen 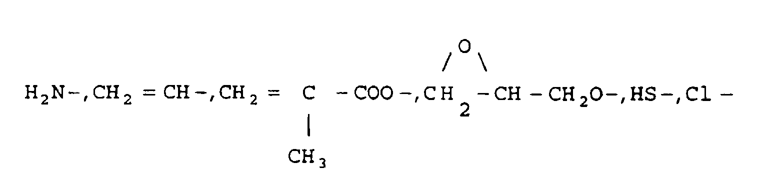 in Betracht. Als siliciumfunktionelle Gruppe X ist beispielsweise eine der folgenden Gruppen geeignet:

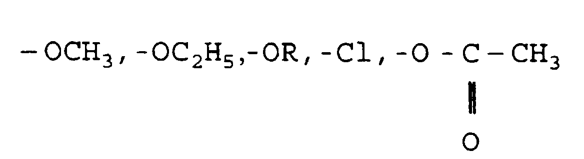

Die Hydrolyse des Silans erfolgt vorzugsweise in einer wässrigen alkoholischen Lösung mit Säure als Katalysator.

Es kann mit einer kleinen Menge an Silanollösung gearbeitet werden. Vorzugsweise wird das Substrat durch Aufbringen der Silanollösung mit weniger als 1 Gew.-% Silan, bezogen auf die Feststoffmenge, benetzt. Durch die sich ggf. nach einer Zwischentrocknung anschließende Behandlung mit Alkalilösung entsteht eine wasserglasähnliche, feste Bindung. Die Umsetzung erfolgt nach der Bindung des Silans an die Substratoberfläche. Da sich die Silane durch die Alkalilösung untereinander vernetzen, erhält man eine feste Verbindung der Substratteilchen untereinander. Vorzugsweise wird als Alkalilösung zur Vernetzung der Silane Natronlauge verwendet. Mit anderen Alkalilösungen sind jedoch ebenfalls wasserglasähnliche, feste Bindungen herstellbar.

Die Aushärtung der mit der Alkalilösung beaufschlagten agglomerierten Feststoffe kann durch eine thermische Trocknung beschleunigt werden.

Bei dem erfindungsgemäßen Verfahren kann durch den Silaneinsatz der Bindemittelanteil sehr gering gehalten werden, was sich günstig auf die Produktqualität auswirkt. Die im Rahmen der erfindungsgemäßen Lehre herstellbaren Granulate sind hydrophob, nehmen also schlecht Wasser auf und werden durch Befeuchtung nicht instabil. Durch die Vernetzungsreaktionen erhalten die Granulate schließlich eine hohe Festigkeit.

Das erfindungsgemäße Verfahren eignet sich zur Konditionierung von Stäuben aus z. B. Elektrofilteranlagen. Im Rahmen der Erfindung liegt es aber auch, als Ausgangsmaterial Schlämme einzusetzen, vorzugsweise nach einer vorhergehenden mechanischen Entwässerung. Sie werden mit einem wasserabsorbierenden Additiv versetzt, wobei ein rieselfähiges Material entsteht, das als Substrat mit der Silanollösung behandelt wird. Die Silanollösung wird vorzugsweise aufgesprüht. Als wasserabsorbierendes Additiv sind insbesondere Natriumacrylat und/oder Kieselgur verwendbar. Die erforderliche Menge an Additiv ist gering und beträgt im allgemeinen weniger als 0,5 Gew.-%.

## Patentansprüche

1. Verfahren zum Stückigmachen feinteiliger, anorganischer Feststoffe, wobei
ein aus feinteiligem Feststoff bestehendes Substrat mit einer wässrigen Silanollösung, die durch Hydrolyse eines Silans hergestellt worden ist, behandelt und durch Mischbewegungen verteilt wird,
das mit der Silanollösung beaufschlagte Material mit einer Alkalilösung behandelt wird, welche an die Substratoberfläche gebundene Silane unter Ausbildung fester Bindungen vernetzt, und
aus dem feinteiligen Feststoff durch einen Preßvorgang oder durch Aufbaugranulation Agglomerate gebildet werden, bevor die Vernetzungsreaktion des Silans erfolgt ist.

2. Verfahren nach Anspruch 1, wobei das mit der Silanollösung beaufschlagte Material vor der Behandlung mit der Alkalilösung getrocknet wird.

3. Verfahren nach Anspruch 1 oder 2, wobei trockene Stäube z. B. aus Elektrofilteranlagen als Ausgangsmaterial verwendet werden.

4. Verfahren nach Anspruch 1 oder 2, wobei Schlämme mit einem wasserabsorbierenden Additiv versetzt werden und das entstehende rieselfähige Material als Substrat mit der Silanollösung behandelt wird.

5. Verfahren nach Anspruch 4, wobei als wasserabsorbierendes Additiv Natriumacrylat und/oder Kieselgur verwendet wird.

6. Verfahren nach einem der Ansprüche 1 bis 5, wobei das Substrat durch Aufbringen der Silanollösung mit weniger als 1 Gew.-% Silan, bezogen auf die Feststoffmenge benetzt wird.

7. Verfahren nach einem der Ansprüche 1 bis 6, wobei als Alkalilösung zur Vernetzung der Silane Natronlauge verwendet wird.

8. Verfahren nach einem der Ansprüche 1 bis 7, wobei die Aushärtung der mit der Alkalilösung beaufschlagten agglomerierten Feststoffe durch eine thermische Trocknung beschleunigt wird.

## Claims

1. A process for pelletizing fine-particle inorganic solids, wherein
a substrate consisting of fine-particle solid is treated with an aqueous silanol solution made by hydrolysis of a silane, and is dispersed by mixing movements,
the material treated with the silanol solution is treated with an alkali solution which cross-links silanes bonded to the substrate surface, with the formation of solid bonds, and
agglomerates are formed from the fine-particle solid by a pressing operation before the cross-linking reaction of the silane has taken place.

2. A process according to claim 1, wherein the material treated with the silanol solution is dried before the treatment with the alkali solution.

3. A process according to claim 1 or 2, wherein dry dusts, for example from electrostatic precipitator installations, are used as starting material.

4. A process according to claim 1 or 2, wherein a water-absorbent additive is added to slurries and the resulting pourable material used as substrate is treated with the silanol solution.

5. A process according to claim 4, wherein the water-absorbent additive used is sodium acrylate and/or kieselguhr.

6. A process according to any one of claims 1 to 5, wherein the substrate is wetted by applying the silanol solution with less than 1% by weight of silane based on the amount of solid.

7. A process according to any one of claims 1 to 6, wherein the alkali solution used for cross-linking the silanes is caustic soda solution.

8. A process according to any one of claims 1 to 7, wherein the curing of the agglomerated solids treated with the alkali solution is accelerated by a thermal drying.

## Revendications

1. Procédé de granulation de matières solides minérales en fines particules, comprenant les étapes consistant
à traiter un substrat constitué de fines particules avec une solution aqueuse de silanol obtenue par hydrolyse d'un silane, et à répartir cette solution par des mouvements de brassage,
à traiter le matériau ayant reçu la solution de silanol avec une solution alcaline permettant la réticulation des silanes fixés à la surface du substrat par établissement de liaisons covalentes, et
à former à partir des fines particules par compression ou par granulation des agglomérats avant que la réaction de réticulation des silanes n'ait eu lieu.

2. Procédé selon la revendication 1, dans lequel on sèche le matériau ayant reçu la solution de silanol avant de le traiter avec la solution alcaline.

3. Procédé selon la revendication 1 ou 2, dans lequel on utilise comme matériau de départ des poussières sèches provenant par exemple d'installations de filtrage électrique.

4. Procédé selon la revendication 1 ou 2, dans lequel on ajoute à des boues un additif absorbant l'eau et que l'on traite le matériau obtenu, ayant la consistance d'une poudre fluide, avec la solution de silanol.

5. Procédé selon la revendication 4, dans lequel on utilise comme matériau absorbant l'eau de l'acrylate de sodium et/ou de la terre d'infusoires.

6. Procédé selon une des revendications 1 à 5, dans lequel on applique sur le substrat, lors du traitement avec la solution de silanol, moins de 1 % en poids de silane, rapporté à la quantité de matières solides.

7. Procédé selon une des revendications 1 à 6, dans lequel on utilise de la soude comme solution alcaline pour la réticulation des silanes.

8. Procédé selon une des revendications 1 à 7, dans lequel le durcissement des matières solides agglomérées et traitées avec la solution alcaline est accélérée par un séchage à chaud.
